# EUROPEAN PATENT SPECIFICATION

(11) **EP 0 598 848 B1**
(45) Date of publication and mention of the grant of the patent: **13.05.1998**
(21) Application number: 92919228.4
(22) Date of filing: 14.08.1992
(51) Int. Cl.: H01B 3/44, C08K 3/04, C08L 23/08

(54) **ELECTRICAL DEVICES HAVING POLYMERIC INSULATING OR SEMICONDUCTING MEMBERS**
ELEKTRISCHE BAUTEILE MIT KUNSTSTOFFISOLIERTEN ODER HALBLEITERELEMENTEN
DISPOSITIFS ELECTRIQUES POSSEDANT DES ELEMENTS SEMI-CONDUCTEURS OU ISOLANTS POLYMERES

(30) Priority: 15.08.1991 US 745479
(43) Date of publication of application: 01.06.1994
(73) Proprietor: EXXON CHEMICAL PATENTS INC., Baytown, TX 77520-5200 (US)
(72) Inventor: SPENADEL, Lawrence, League City, TX 77573 (US); HENDEWERK, Monica, Louise, Houston, TX 77096 (US); MEHTA, Aspy, Keki, Humble, TX 77346 (US)
(74) Representative: Dew, Melvyn John
(86) International application number: PCT/US92/06894
(87) International publication number: WO 93/04486

(56) References cited:
- EP-A- 0 340 785
- WO-A-90/03414
- DE-A- 3 312 794
- DE-A- 3 430 184
- US-A- 4 276 251
- US-A- 4 871 705

## Description

### FIELD OF THE INVENTION

The present invention relates to electrically conductive or semiconductive products. In particular, this invention relates to electrically conductive or semiconductive products comprising polyolefins. Even more particularly, this invention relates to electrically conductive or semiconductive products comprising polymeric insulating or semiconducting members, which have improved resistance to the phenomenon of water treeing and other important properties.

### BACKGROUND OF THE INVENTION

Typical power cables generally comprise one or more conductors in a core that is generally surrounded by several layers that include, a first polymeric semiconducting shield layer, a polymeric insulating layer, a second polymeric semiconducting shield layer, a metallic tape shield, and a polymeric jacket.

A wide variety of polymeric materials have been utilized as electrical insulating and semiconducting shield materials for power cables and in other numerous applications. In order to be utilized in services or products where long term performance is desired or required, such polymeric materials, in addition to having suitable dielectric properties, must also be enduring and must substantially retain their initial properties for effective and safe performance over many years of service. For example, polymeric insulation utilized in building wire, electrical motor or machinery power wires, or underground power transmitting cables, must be enduring not only for safety but also out of economic necessity and practicality. It is easy to see the danger of a non-enduring polymeric insulator on building electrical wire, or the impracticality of having to replace underground transmission cables frequently because of a non-enduring polymeric insulation.

One major type of failure that polymeric power cable insulation can undergo, is the phenomenon known as treeing. Treeing generally progresses through a dielectric section under electrical stress so that, if visible, its path looks something like a tree, hence the name "treeing." Treeing may occur and progress slowly by periodic partial discharge, it may occur slowly in the presence of moisture without any partial discharge, or it may occur rapidly as the result of an impulse voltage. Trees may form at the site of a high electrical stress such as contaminants or voids in the body of the insulation-semiconductive screen interface. In solid organic dielectrics, treeing is the most likely mechanism of electrical failures which do not occur catastrophically, but rather appear to be the result of a more lengthy process. In the past, extending the service life of polymeric insulation has been achieved by modifying the polymeric materials by blending, grafting or copolymerization of silane based molecules or other additives so that either trees are initiated at higher voltages than usual or the growth rate of trees is reduced once initiated.

The phenomenon of treeing itself can be further characterized as two distinct phenomena known as electrical treeing and water treeing.

Electrical treeing results from internal electrical discharges which decompose the dielectric. Although high voltage impulses can produce electrical trees, and the presence of internal voids and contaminants is undesirable, the damage which results from application of moderate A/C voltages to electrode/insulation interfaces which contain imperfections is more commercially significant. In this case, very high, localized stress gradients can exist and with sufficient time lead to initiation and growth of trees which may be followed by breakdown. An example of this is a high voltage power cable or connector with a rough interface between the conductor or conductor shield and the primary insulator. The failure mechanism involves actual breakdown of the molecular structure of the dielectric material perhaps by electron bombardment. In the past much of the art is concerned with the inhibition of electrical trees.

In contrast to electrical treeing which results from internal electrical discharges which decompose the dielectric, water treeing is the deterioration of a solid dielectric material which is simultaneously exposed to liquid or vapor and an electric field. It is a significant factor in determining the useful life of buried power cables. Water trees initiate from sites of high electrical stress such as rough interfaces, protruding conductive points, voids, or imbedded contaminants but at a lower field than that required for electrical trees. In contrast to electrical trees, water trees are characterized by: (a) the presence of water is essential for their growth; (b) no partial discharge is normally detected during their growth; (c) they can grow for years before reaching a size where they may contribute to a breakdown; (d) although slow growing they are initiated and grow in much lower electrical fields than those required for the development of electrical trees.

Electrical insulation applications are generally divided into low voltage insulation which are those less than 1 K volts, medium voltage insulation which ranges from 1 K volts to 35 K volts, and high voltage insulation, which is for applications above 35 K volts. In low to medium voltage applications, for example electrical devices and applications in the automotive industry, electrical treeing is generally not a pervasive problem and is far less common than water treeing, which frequently is a problem.

For medium voltage applications, the most common polymeric insulators are made from either polyethylene homopolymers or ethylene-propylene elastomers, otherwise known as ethylene-propylene-rubber (EPR).

Polyethylene is generally used neat without a filler as an electrical insulation material. Polyethylene has very good dielectric properties, especially dielectric constant and power factor. The dielectric constant of polyethylene is in the range of about 2.2 to 2.3 which is an acceptable value. The power factor, which is a function of electrical energy dissipated and lost, and therefore should be as low as possible, is around 0.0002, which is not only acceptable, but a very desirable value. The mechanical properties of polyethylene are also very adequate for utilization as medium voltage insulation.

However, polyethylene homopolymers are very prone to water treeing especially toward the upper end of the medium voltage range.

There have been attempts in the past to make polyethylene based polymers that would have long term electrical stability. For example, when dicumyl peroxide is used as a crosslinking agent for polyethylene, the peroxide residue functions as a tree inhibitor for some time after curing. However, these residues are eventually lost at most temperatures of electrical power cable service. U.S. Patent No. 4,144,202 issued March 13, 1979 to Ashcraft, at al. discloses the incorporation into polyethylenes of at least one epoxy containing organo silane as a treeing inhibitor. However, a need still exists for a polymeric insulator having improved treeing resistance over such silane containing polyethylenes.

Unlike polyethylene which can be utilised neat, the other common medium voltage insulator, EPR, must be filled with a high level of filler in order to resist treeing. When utilized as a medium voltage insulator, EPR will generally contain about 20 to about 50 weight percent filler, most likely, calcined clay, and it is preferably crosslinked with peroxides. The presence of the filler gives EPR a high resistance against propagation of trees.

EPR also has comparable mechanical properties to polyethylene.

While the fillers utilized in EPR may help prevent treeing, they unfortunately will generally have poor dielectric properties, i.e. poor dielectric constant and poor power factor. The dielectric constant of filled EPR is in the range of about 2.3 to about 2.8. The power factor of filled EPR is on the order of about 0.002 to about 0.005, which is about an order of magnitude worse than polyethylene.

Thus, while polyethylene has good dielectric properties, and good mechanical properties, it needs improvement in water tree resistance. While filled EPR has good treeing resistance, it needs improvement in dielectric properties.

Another class of polymers exist today which are generally referred to as linear polyethylenes. These types of polymers are described in EPA Publication 0 341 644 published November 15, 1989. This particular reference is directed toward linear polyethylenes produced by a traditional Ziegler-Natta catalyst system and have generally a broad molecular weight distribution similar to linear low density polyethylene and at low enough densities can show better tree retardancy. However, these linear type polymers in the wire and cable industry have poor melt temperature characteristics. In order to achieve a good mix in an extruder, linear polymers must be processed at a temperature at which traditionally used peroxides prematurely crosslink the polymers, a phenomenon commonly referred to as "scorch". If the processing temperature is held low enough to avoid scorch, incomplete melting occurs because of higher melting species in linear polymers with a broad molecular weight distribution. This phenomenon results in poor mixing, surging extruder pressures and other poor results.

Therefore, a need exists in the insulation art for a polymeric insulation having good mechanical properties, good dielectric properties and good water treeing resistance.

### SUMMARY OF THE INVENTION

This invention relates to electrical devices having a polymeric insulating and/or conductive members that unexpectedly and surprisingly exhibit improved treeing and other physical and mechanical properties.

According to one embodiment of the present invention there is provided an electrically conductive device comprising: (a) an electrically conductive member comprising at least one electrically conductive substrate; and (b) at least one electrically insulating member in proximity to the electrically conductive member. In this embodiment of this present invention, the insulating member comprises a polymer selected from the group consisting of ethylene polymerized with at least one comonomer selected from the group consisting of C₃ to C₂₀ alpha-olefins and C₃ to C₂₀ polyenes, and wherein the polymer has a density in the range of about 0.86 g/cm³ to about 0.96 g/cm³, a melt index (ASTM-D-1238) in the range of about 0.2 dg/min. to about 100 dg/min., a molecular weight distribution in the range of about 1.5 to about 30. The polymer also has a composition distribution breadth index greater than 45 percent and a solubility distribution index less than 28°C and is obtainable through the use of a metallocene catalyst.

According to another embodiment of the present invention, there is provided an electrically conductive device comprising: (a) an electrically conductive member comprising at least one electrically conductive substrate; and (b) at least one semiconductive member in proximity to the electrically conductive member. In this embodiment, the semiconducting member comprises the above described polymer.

According to yet another embodiment of the present invention, there is provided a semiconductive device comprising: (a) a semiconductive member; and (b) an electrically insulating member in proximity to the semiconductive member. In this embodiment, the semiconductive member and/or the electrically insulating member comprise the above described polymer.

### BRIEF DESCRIPTION OF THE DRAWINGS

The foregoing aspects, features, and advantages of the invention will become clearer and more fully understood when the following detailed description is read in conjunction with the accompanying drawings, in which:

FIG. 1 is an illustration of the test apparatus utilized to determine the degree of treeing of the various samples that were tested.

FIG. 2 is a representation of the method for analyzing the test samples once they have been aged in the test apparatus of FIG. 1.

FIG. is an illustration of a typical potter cable, and shows a multiplicity of conducting substrates comprising the conductive core that is substantially surrounded by several protective layers that are either jacket, insulator or semiconductive shield layers.

FIG. 4(a) and FIG 4(b) are cross-sectional views of typical medium voltage and low voltage power lines respectively.

FIG. 5 is a graph of the peroxide response for various polymers.

FIG. 6 is a graph of the radiation response for various polymers.

FIG. 7 is a graph of the solubility distribution and composition distribution of a copolymer (X) having a narrow SDBI and CDBI and copolymer (Y) having a broad SDBI and CDBI.

FIG. 8 is a graph illustrating the correlation between dissolution temperature and composition used to convert the temperature scale to a composition scale.

FIG. 9 is a graph illustrating the method for calculating CDBI.

### DETAILED DESCRIPTION OF THE INVENTION

The present invention particularly relates to polymeric products utilizing polyolefins, wherein the products have the unique combination of good mechanical properties, good dielectric properties and good water treeing resistance, and lower melt temperature for processability with peroxide containing compounds, and are useful as electrical insulators and semiconductors.

There are a number of structural variables in polyolefins which affect the ultimate properties of the polymer. Two of the most important are composition distribution (CD) and molecular weight distribution (MWD). Composition distribution refers to the distribution of comonomer between copolymer molecules and the distribution of comonomer within each polymer molecule. In this present invention polymer modification is the modification of the molecular architecture of the polymer without the addition of molecules other than hydrocarbons. This feature relates directly to polymer crystallizability, optical properties, toughness, melt processability, and many other important end use characteristics. Molecular weight distribution plays a significant role in the level and balance of physical properties achievable. MWD is also a significant factor in melt processability. The polymers of this present invention have a unique combination of MWD and composition distribution (CD). The MWD is very narrow and the CD is homogeneous between molecules and better than random within the molecules. This unique combination of having a polyolefin polymer with the physical strength properties, electrical properties, tree retardancy, as can be seen from Table VIII, and melt temperature is highly desirable in the electrical devices area, specifically, for use in wire and cable applications.

Also important is the molecular weight (MW) of the polymer, which determines the level of melt viscosity and the ultimately desired physical properties of the polymer. The type and amount of comonomer also affects the physical properties and crystallizability of the copolymer.

The polymers utilized in the jacketing, insulating or semiconducting members of the inventive devices of the present invention are obtainable through the use of a class of highly active olefin catalysts known as metallocenes.

Metallocenes are well known especially in the preparation of polyethylene and copolyethylene-alpha-olefins. These catalysts, particularly those based on group IVB transition metals, zirconium, titanium and hafnium, show extremely high activity in ethylene polymerization. These transition metal metallocene compounds are generally represented by the formula (Cp)ₘMRₙR'ₚ wherein Cp is a substituted, unsubstituted, bridged, unbridged or a combination, cyclopentadienyl ring; M is a Group IVB or VB transition metal; R and R' are independently selected from a halogen, hydrocarbyl group, or hydrocarboxyl groups having 1-20 carbon atoms; m=1-3, n=0-3, p=0-3, and the sum of m+n+p equals the oxidation state of M. Various forms of the catalyst system of the metallocene type may be used for polymerization to prepare the polymers used in this present invention including but not limited to those of homogeneous, supported catalyst type wherein the catalyst and cocatalyst are together supported or reacted together onto an inert support for polymerization by a gas phase process, high pressure process or a slurry or a solution polymerization process. The metallocene catalysts are also highly flexible in that, by manipulation of the catalyst composition and reaction conditions, they can be made to provide polyolefins with controllable molecular weights from as low as about 200 (useful in applications such as lube oil additives) to about 1 million or higher, as for example in ultra high molecular weight linear polyethylene. At the same time, the molecular weight distribution of the polymers can be controlled from extremely narrow (as in a polydispersity, M_{w}/Mₙ, of about 2), to broad (as in a polydispersity of about 8).

Exemplary of the development of these metallocene catalysts for the polymerization of ethylene is U.S. Patent No. 4,937,299 to Ewen, et al. and EP-A-129368 hereby fully incorporated by reference. Among other things, this art teaches that the metallocene catalyst system may include a cocatalyst such as alumoxane, formed when water reacts with trialkyl aluminum with the release of methane, which alumoxane complexes with the metallocene compound to form the catalyst. However other cocatalysts may be used with metallocenes, such as trialkylaluminum compounds; or ionizing ionic compounds such as, tri(n-butyl)ammonium tetra(pentafluorophenyl) boron, which ionize the neutral metallocene compound. Such ionizing compounds may contain an active proton, or some other cation such as carbonium, which ionize the metallocene on contact, forming a metallocene cation associated with (but not coordinated or only loosely coordinated to) the remaining ion of the ionizing ionic compound. Such compounds are described in EP-A-0 277 003 and 0 277 004 both published August 3, 1988 and are hereby fully incorporated by reference. Further, the metallocene catalyst component can be a monocylopentadienyl heteroatom containing compound, which is activated by either an alumoxane or an ionic activator to form an active polymerization catalyst system to produce polymers useful in this present invention as is shown for example by PCT International Publication WO92/00333 published January 9, 1992, U.S. Pat. Nos. 5,096,867 and 5,055,438, respectively, EP-A-0 420 436 and WO91/04257 all of which are fully incorporated herein by reference.

Metallocene catalysts are particularly attractive in making tailored ultra uniform and super random specialty copolymer. For example, if a lower density copolymer is being made with a metallocene catalyst such as very low density polyethylene, (VLDPE), an ultra-uniform and super random copolymerization will occur, as contrasted to the polymer produced by copolymerization using a conventional Ziegler catalyst. In view of the ongoing need for polymeric electrical insulators and semiconductors encompassing good mechanical properties, good dielectric properties and good water treeing resistance, as well as the need to process these materials at temperatures low enough to allow scorch free processing, it would be desirable to provide products utilizing the high quality characteristics of polyolefins prepared with metallocene catalysts.

The polymer utilized in the jacketing, insulating or semiconducting members of the devices of the present invention is selected from the group of polymers consisting of ethylene polymerized with at least one comonomer selected from the group consisting of C₃ to C₂₀ alpha-olefins and C₃ to C₂₀ polyenes. The types of monomers selected in the polymer utilized in the present invention will depend upon economics and the desired end use of the resultant device.

Generally, the alpha-olefins suitable for use in the present invention contain in the range of about 3 to about 20 carbon atoms. Preferably, the alpha-olefins contain in the range of about 3 to about 16 carbon atoms, most preferably in the range of about 3 to about 8 carbon atoms. Illustrative non-limiting examples of such alpha-olefins are propylene, 1-butene, 1-pentene, 1-hexene, 1-octene and 1-dodecene.

Preferably, the polymers utilized in the devices of the present invention are either ethylene/alpha-olefin copolymers or ethylene/alpha-olefin/diene terpolymers. Illustrative non-limiting examples of suitable copolymers are those such as ethylene/butene-1, ethylene/hexene-1, ethylene/octene-1, and ethylene/propylene copolymers. Suitable examples of terpolymers include ethylene/propylene/1,4-hexadiene and ethylene/butene-1/1,4-hexadiene.

The polyene utilized in the present invention generally has in the range of about 3 to about 20 carbon atoms. Preferably, the polyene has in the range of about 4 to about 20 carbon atoms, most preferably in the range of about 4 to about 15 carbon atoms. Preferably, the polyene is a diene, that generally has in the range of about 3 to about 20 carbon atoms. Preferably, the diene utilized in the present invention is a straight chain, branched chain or cyclic hydrocarbon diene preferably having from about 4 to about 20 carbon atoms, and most preferably from about 4 to about 15 carbon atoms, and still most preferably in the range of about 6 to about 15 carbon atoms. Most preferably, the diene is a non conjugated diene. Examples of suitable dienes are straight chain acyclic dienes such as: 1,3-butadiene, 1,4-hexadiene and 1,6-octadiene; branched chain acyclic dienes such as: 5-methyl-1,4-hexadiene, 3,7-dimethyl-1,6-octadiene, 3,7-dimethyl-1,7-octadiene and mixed isomers of dihydro myrcene and dihydroocimene; single ring alicyclic dienes such as: 1,3-cyclopentadiene, 1,4-cylcohexadiene, 1,5-cyclooctadiene and 1,5-cyclododecadiene; and multi-ring alicyclic fused and bridged ring dienes such as: tetrahydroindene, methyl tetrahydroindene, dicylcopentadiene, bicyclo-(2,2,1)-hepta-2-5-diene; alkenyl, alkylidene, cycloalkenyl and cycloalkylidene norbornenes such as 5-methylene-2-norbornene (MNB), 5-propenyl-2-norbornene, 5-isopropylidene-2-norbornene, 5-(4-cyclopentenyl)-2-norbornene, 5-cyclohexylidene-2-norbornene, 5-vinyl-2-norbornene and norbornene. Of the dienes typically used to prepare EFR's, the particularly preferred dienes are 1,4-hexadiene, 5-ethylidene-2-norbornene, 5-vinylidene-2-norbornene 5-methylene-2-norbornene and dicyclopentadiene. The especially preferred dienes are 5-ethylidene-2-norbornene and 1,4-hexadiene.

The polymers suitable in the prevent invention with desired monomer levels can be prepared by polymerization of the suitable monomers in the presence of supported or unsupported catalysts systems. Preferably the catalyst system utilized is a metallocene catalyst system of the type previously described.

The precise monomer content of the polymers utilized in the present invention will depend upon economics and the desired applications of the resultant device. Typically the polymers utilized in the present invention, will generally comprise in the range of about 68 mole percent to about 99 mole percent ethylene (based on the total moles of monomer). Preferably, the polymers have a minimum of 73 mole percent, most preferably, 75 mole percent ethylene. Preferably, the polymers have a maximum of 98, most preferably, 94 mole percent ethylene. Preferably, the polymers utilized in the jacketing, insulating or semiconducting members of the present invention, will generally comprise in the range of about 73 mole percent to about 98 mole percent ethylene, and most preferably in the range of about 75 mole percent to about 94 mole percent. The other monomers will comprise the balance of the polymer.

The polymers utilized in the polymeric members of the present invention have a density in the range of about 0.860 g/cm³ to about 0.960 g/cm³. Preferably, the polymers have a minimum density of about 0.865 g/cm³, most preferably about 0.870 g/cm³. Preferably, the polymers have a maximum density of about 0.93 g/cm³, most preferably about 0.91 g/cm³. Preferably the density is in the range of about 0.865 g/cm³ to about 0.93 g/cm³. Most preferably, the density is in the range of about 0.870 g/cm³ to about 0.910 g/cm³. Densities were measured using standard accepted procedures, except that they were additionally conditioned by holding them for 48 hours at ambient temperature (23°C), prior to density measurement.

The melt index (MI) of the polymers utilized in the present invention is such that the polymer can be extruded in the desired end product. Generally the melt index is in the range of about 0.2 dg/min. to about 100 dg/min. Preferably, the MI is at least about 1 dg/min., most preferably at least about 3 dg/min. Preferably, the maximum MI is about 50 dg/min., most preferably about 30 dg/min. Preferably the MI is in the range of about 1 dg/min. to about 50 dg/min., and most preferably in the range of about 3 dg/min. to about 30 dg/min. MI as measured herein was determined according to ASTM D-1238 (190/2.16). High load MI was determined according to ASTM D-1238 (190/21.6).

The polymers utilized in the electrically conductive or semiconductive devices of the present invention have a molecular weight distribution such that the polymer will have the desired electrical properties and still be processable into the desired end product. The ratio of M_{w}/Mₙ is generally in the range of about 1.5 to about 30. The maximum ratio is preferably about 10 and most preferably about 3.5. The minimum ratio is about 1.5, most preferably about 1.8. Preferably the ratio is in the range of about 1.7 to about 10, and most preferably in the range of about 1.8 to about 3.5.

The composition distribution breadth index (CDBI) of the polymers utilized in the polymeric members of the present invention is generally about 45 percent or higher. Preferably, the CDBI is about 50 percent or higher. Most preferably, the CDBI is about 60 percent or higher, and even more preferably, about 70 percent or higher and even more preferably about 80 percent. As used herein, the CDBI is defined as the weight percent of the copolymer molecules having a comonomer content within 50 percent (i.e. ± 50%) of the median total molar comonomer content. The CDBI of linear polyethylene, which does not contain a comonomer, is defined to be 100%.

The Composition Distribution Breadth Index (CDBI) is determined via the technique of Temperature Rising Elution Fractionation (TREF). CDBI determination clearly distinguishes, for example, the plastomers utilized in this invention (narrow composition distribution as assessed by CDBI values of about 45% or higher) from those traditionally utilized in past insulation products (broad composition distribution as assessed by CDBI values generally less than 45%). The CDBI of a copolymer is readily calculated from data obtained from techniques known in the art, such as, for example, temperature rising elution fractionation as described, for example, in U.S. Patent No. 5,008,204, or in Wild, et al., J: Poly. Sci, Poly. Phys. Ed., vol. 20, p. 441 (1982) both of which are hereby fully incorporated by reference.

solubility Distribution is measured using a column of length 164 cm and 1.8 cm ID (inner diameter) which is packed with non-porous glass beads (20-30 mesh) (548-841 µm) and immersed in a temperature programmable oil bath. The bath is stirred very vigorously to minimize temperature gradients within the bath, and the bath temperature is measured using a platinum resistance thermometer. About 1.6 g of polymer is placed in a sample preparation chamber and repeatedly evacuated and filled with nitrogen to remove oxygen from the system. A metered volume of tetrachlorethylene solvent is then pumped into the sample preparation chamber, where it is stirred and heated under 3 atmospheres (3.04 bar) pressure at 140°C to obtain a polymer solution of about 1 percent concentration. A metered volume of this solution, 100 cc is then pumped into the packed column thermostated at a high temperature, 120°C.

The polymer solution in the column is subsequently crystallized by cooling the column to 0°C at a cooling rate of 20°C/min. The column temperature is then maintained at this temperature for 25 min. at 0°c. The elution stage is then begun by pumping pure solvent, preheated to the temperature of the oil bath, through the column at a flow rate of 27 cc/min. Effluent from the column passes through a heated line to an IR detector which is used to measure the absorbance of the effluent stream. The absorbance of the polymer carbon-hydrogen stretching bands at about 2960 cm⁻¹ serves as a continuous measure of the relative weight percent concentration of polymer in the effluent. After passing through the infrared detector the temperature of the effluent is reduced to about 110°C, and the pressure is reduced to atmospheric pressure before passing the effluent stream into an automatic fraction collector. Fractions are collected in 3°C intervals. In the elution stage pure tetrachlorethylene solvent is pumped through the column at 0 °C at 27 cc/min. for 25 min. This flushes polymer that has not crystallized during the cooling stage out of the column so that the percent of uncrystallized polymer (i.e. the percent of polymer soluble at 0°C) can be determined from the infrared trace. The temperature is then programmed upward at a rate of 1.0°C/min. to 120°C. A solubility distribution curve, i.e. a plot of weight fraction of polymer solubilized as a function of temperature, is thus obtained.

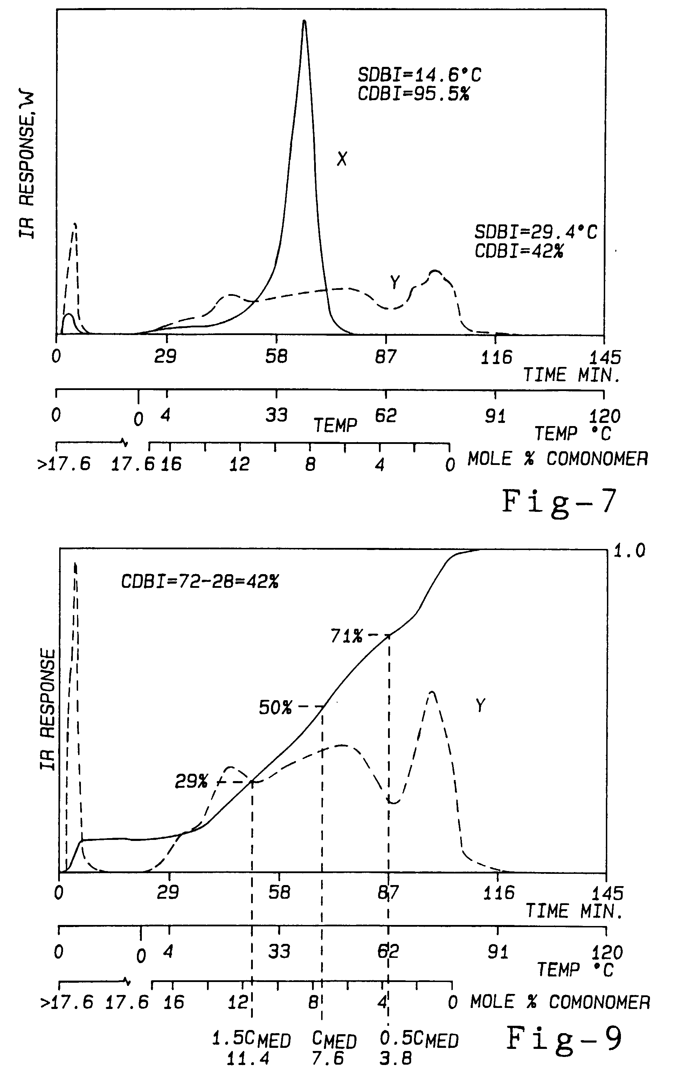

The procedure for calculating the Solubility Distribution Breadth Index (SDBI) is set forth below. Solubility distributions of two ethylene interpolymers are shown in FIG. 7. Here, for illustration purposes only, Sample X has a narrow solubility distribution and elutes over a narrow temperature range compared to Sample Y, which has a broad solubility distribution. A solubility distribution breadth index (SDBI) is used as a measure of the breadth of the solubility distribution curve. Let *w*(T) be the weight fraction of polymer eluting (dissolving) at temperature T. The average dissolution temperature, T ₐᵥₑ, is given by${\text{T}}_{\text{ave}} \text{= ∫T} \text{w} \text{(T)dT, where ∫} \text{w} \text{(T)dT = 1.}$ SDBI is calculated using the relation:${\text{SDBI(°C) = [(T - T}}_{\text{ave}} {\text{)}}^{\text{4}} \text{w} {\text{(T)dT]}}^{\text{1/4}}$

(SDBI is thus analogous to the standard deviation of the solubility distribution curve, but it involves the fourth power rather than the second power to T - Tₐᵥₑ). Thus, for example, the narrow solubility distribution Sample X and the broad solubility distribution Sample Y in FIG. 7 have SDBI values equal to 14.6°C and 29.4°C, respectively. The preferred values of SDBI are less than 28°C and more preferred less than 25°C and even more preferred less than 20°C.

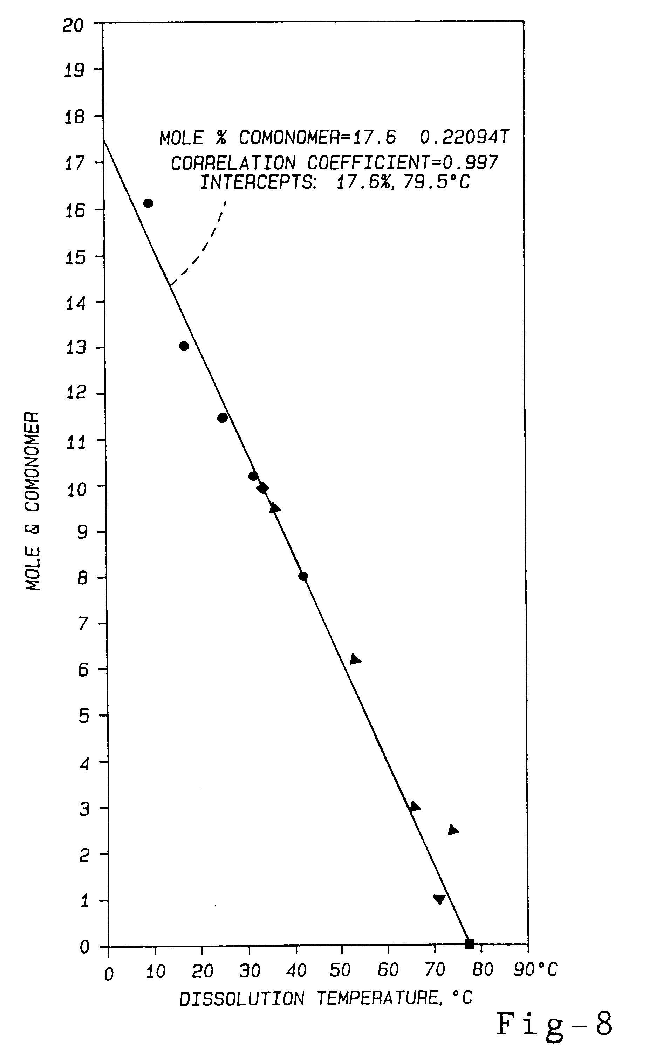

The composition distribution (CD) of a crystalline interpolymer is determined as follows. The composition and number average molecular weight, Mₙ, of fractions collected in various narrow temperature intervals for several poly(ethylene-co-butene)'s was determined by C13 NMR and size exclusion chromatography, respectively. FIG. 8 is a plot of mole percent comonomer vs. elution temperature for fractions having Mₙ > 15,000. The curve drawn through the data points is used to correlate composition with elution temperature for temperatures greater than 0°C. The correlation between elution temperature and composition becomes less accurate as the Mₙ of a fraction decreases below 15,000. Such errors can be eliminated by direct measurement of the composition of effluent fractions by C13 NMR. Alternatively, the elution temperature-composition calibration for high molecular weight fractions given in Figure 8 may be corrected based on the Mₙ of effluent fractions and an experimentally established correlation between Mₙ and elution temperature that applies for Mₙ < 15,000. However, it is assumed that such low molecular weight molecules are present to a negligible extent and that any errors caused are negligible. A correlation curve such as the one in FIG. 8 is applicable to any essentially random poly(ethylene-co-α-olefin) provided, however, that the α-olefin is not propylene.

The temperature scale of a solubility distribution plot can thus be transformed to a composition scale, yielding a weight fraction of polymer versus composition curve. As seen from the composition scale in FIG. 8, Sample X contains molecules spanning a narrow composition range, whereas Sample Y contains molecules spanning a wide composition range. Thus, Sample X has a narrow composition distribution whereas Sample Y has a broad composition distribution.

A quantitative measure of the breadth of the composition distribution is provided by the Composition Distribution Breadth Index (CDBI). CDBI is defined to be the percent of polymer whose composition is within 50% of the median comonomer composition. It is calculated from the composition distribution cure and the normalized cumulative integral of the composition distribution curve, as illustrated in FIG. 9. The median composition, C_{med}, corresponds to the composition at the point where the cumulative integral equals 0.5. The difference between the values of the cumulative integral at compositions 0.5 C_{med} and 1.5 C_{med} (71 - 29, or 42%, in this example) is the CDBI of the copolymer. CDBI values fall between zero and one, with large values indicating narrow CD and low values indicating broad CD. Thus, now referring back to Figure 7, the narrow and broad CD copolymers have CDBI's equal to 95.5% and 42%, respectively. It is difficult to measure the CD and CDBI of copolymers having very low comonomer content with high accuracy so the CDBI of polyethylenes with densities greater than 0.94 g/cc is defined to be equal to 100%.

Unless otherwise indicated, terms such as "comonomer content", "average comonomer content" and the like refer to the bulk comonomer content of the indicated interpolymer blend, blend component or fraction on a molar basis.

By the use of a polymer as described above, a jacket, insulating or semiconducting member can be made that will have a resistance to treeing and good electrical properties, that is, good dielectric constant and power factor.

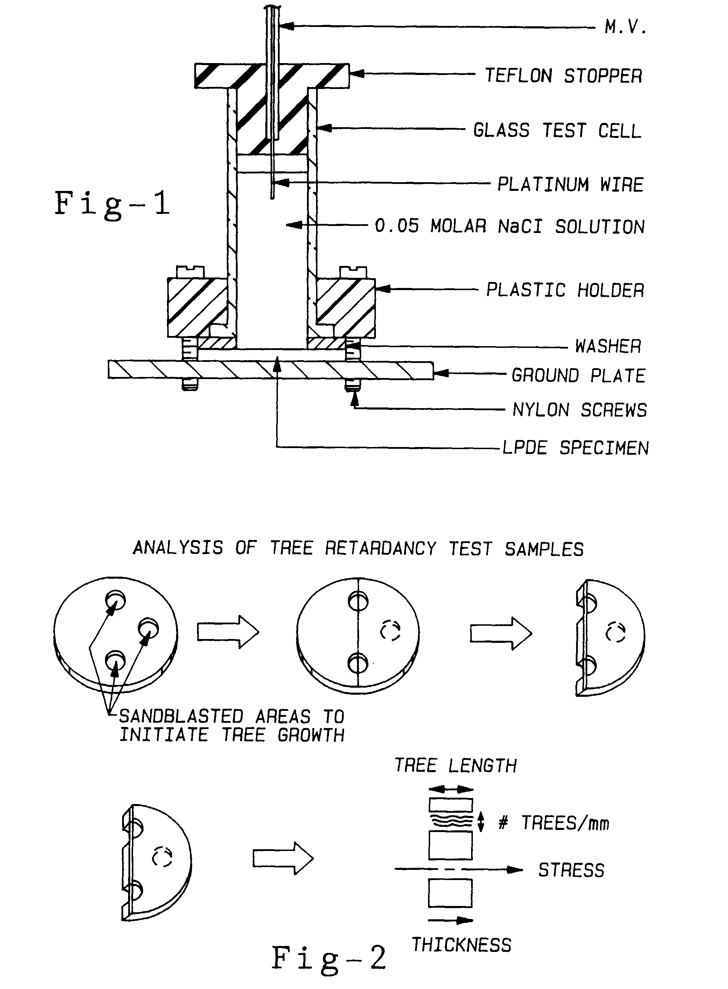

The tree rating as described in the present invention is determined according to the method of Densley, et al., *Water Treeing Studies* in *Cable Insulation, Proceedings of the Twenty Second Symposium on Electrical Insulating Materials* (Tokyo, Japan, 1989) and Bulinski, et al., *Water Treeing in a Heavily Oxidized Cross-linked Polyethylene Insulation,* Sixth International Symposium On High Voltage Engineering, New Orleans (August 28 - September 1, 1989), both herein incorporated by reference. The general method is as follows. A 75 mil (0.1905 cm) plaque of the material to be tested is pressed at 175°C and then cut into 1 inch (2.54 cm) diameter circles. Three small areas are sandblasted onto the surface of the circles to accelerate tree initiation. The samples were stressed for 3,500 hours at 6kV, 1000HZ at 75°C, in contact with 0.1M NaCl solution, using an apparatus as shown in FIG. 1. The degree of treeing was determined by slicing the sample vertically through two of the sandblasted areas and then measuring the length of the trees relative to the thickness of the sample (Length/Thickness × 100 = tree rating)(stress is inversely proportional to the sample thickness). FIG. 2 is a representation of the method for analyzing the tree retardancy test samples.

The polymer utilized in the jacketing, insulating or semiconducting member has a good tree rating superior to that of neat polyethylenes, and that compares well to filled EPR's. The tree rating is generally less than about 40, preferably less than about 25, and most preferably less than about 15, and still even more preferably less than about 10.

Not only do the polymers utilized in the present invention have good resistance to treeing that compares favorably to filled EPR's, they also posses good dielectric properties that compare favorably to neat polyethylenes. Generally the dielectric constant of the polymers utilized in the present invention is in the range of about 1.8 to about 2.4.

Another good dielectric property possessed by the polymers utilized in the present invention is a good power factor. The power factor of the polymer is generally in the range of about 0.0002 to about 0.0005.

The polymers useful in fabricating the jacket, insulating or semiconducting members of the present invention are made by utilizing a class of highly active olefin catalysts known as metallocenes, which are well known especially in the preparation of polyethylene and copolyethylene-alpha-olefins. These catalysts systems as previously described, particularly those based on group IVB transition metals, zirconium, titanium and hafnium, show extremely high activity in ethylene polymerization. The metallocene catalysts are also highly flexible in that, by manipulation of catalyst composition and reaction conditions, they can be made to provide polyolefins with controllable molecular weights from as low as about 200 (useful in applications such as lube oil additives) to about 1 million or higher, as for example in ultra high molecular weight linear polyethylene. At the same time, the molecular weight distribution of the polymers can be controlled from extremely narrow (as in a polydispersity, M_{w}/Mₙ of about 2), to broad (as in a polydispersity of about 8).

Exemplary of the development of these metallocene catalysts for the polymerization of ethylene are U.S. Patent No. 4,937,299 to Ewen, et al., U.S. Patent No. 4,808,561 to Welborn, Jr., and U.S. Patent No. 4,814,310 to Chang, all hereby are fully incorporated by reference. Among other things, Ewen, et al. teaches that the structure of the metallocene catalyst includes an alumoxane, formed when water reacts with trialkyl aluminum with the release of methane, which alumoxane complexes with the metallocene compound to form the catalyst. Welborn, Jr. teaches a method of polymerization of ethylene with alpha-olefins and/or diolefins. Chang teaches a method of making a metallocene alumoxane catalyst system utilizing the absorbed water in a silica gel catalyst support.

Specific methods for making ethylene/alpha-olefin copolymers, and ethylene/alpha-olefin/diene terpolymers are taught in U.S. Patent Nos. 4,871,705 (issued October 3, 1989)and 5,001,205 (issued March 19, 1991) to Hoel, et al., and in EPA Publication 0 347 129 published April 8, 1992, respectively, all of which are hereby fully incorporated by reference.

Utilizing a metallocene catalyst, the polymers useful in the present invention can be produced in accordance with any suitable polymerization process, including a slurry polymerization, gas phase polymerization, and high pressure polymerization and solution polymerization process.

A slurry polymerization process generally uses super-atmospheric pressures and temperatures in the range of 40-100°C. In a slurry polymerization, a suspension of solid, particulate polymer is formed in a liquid polymerization medium to which ethylene and comonomers and often hydrogen along with catalyst are added. The liquid employed in the polymerization medium can be an alkane, cycloalkane, or an aromatic hydrocarbon such as toluene, ethylbenzene or xylene. The medium employed should be liquid under the conditions of polymerization and relatively inert. Preferably, hexane or toluene is employed.

Preferably, the polymer utilized in the insulating or semiconducting components of the present invention is formed by gas-phase polymerization. A gas phase process utilizes super-atmospheric pressure and temperatures in the range of about 50°-120°C. Gas phase polymerization can be performed in a stirred or fluidized bed of catalyst and product particles in a pressure vessel adapted to permit the separation of product particles from unreacted gases. Thermostated ethylene, comonomer, hydrogen and an inert diluent gas such as nitrogen can be introduced or recirculated so as to maintain the particles at a temperature of 50°C -120°C. Triethylaluminum may be added as needed as a scavenger of water, oxygen, and other adventitious impurities. Polymer product can be withdrawn continuously or semi-continuously at a rate such as to maintain a constant product inventory in the reactor. After polymerization and deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal.

The polymers of the present invention may also be produced in accordance with a high pressure process by polymerizing ethylene in combination with the other desired monomers in the presence of the metallocene/alumoxane catalyst system. It is important in the high pressure process, that the polymerization temperature be above about 120°C but below the decomposition temperature of said product and that the polymerization pressure be above about 500 bar (kg/cm²). In those situations wherein the molecular weight of the polymer product that would be produced at a given set of operating conditions is higher than desired, any of the techniques known in the art for control of molecular weight, such as the use of hydrogen or reactor temperature, may be used to make the polymer useful in the devices of the present invention.

The polymers utilized in the present invention may be crosslinked chemically or with radiation. A suitable free radical crosslinking agent is a peroxide such as dicumyl peroxide. Alternatively, the polymer may be crosslinked by grafting of a silane to the backbone followed by hydrolysis to form crosslinks between adjacent polymer chains via siloxane linkages. This is the so called moisture cure technique.

The insulating member of the device of the present invention may comprise a "neat" polymer, or it may optionally be filled. An illustrative example of a suitable filler is Kaolin clay. The semiconducting member of the present invention must be filled with a conducting filler to render the member semiconducting. The most common filler for semiconducting applications is carbon black, which will generally comprise 30 to 40 weight percent of the filled semiconducting member.

Other additives commonly employed in polyolefin compositions such as, for example, crosslinking agents, antioxidants, processing aids, pigments, dyes, colorants, metal deactivators, oil extenders, stabilizers, and lubricants may be utilized in the present invention.

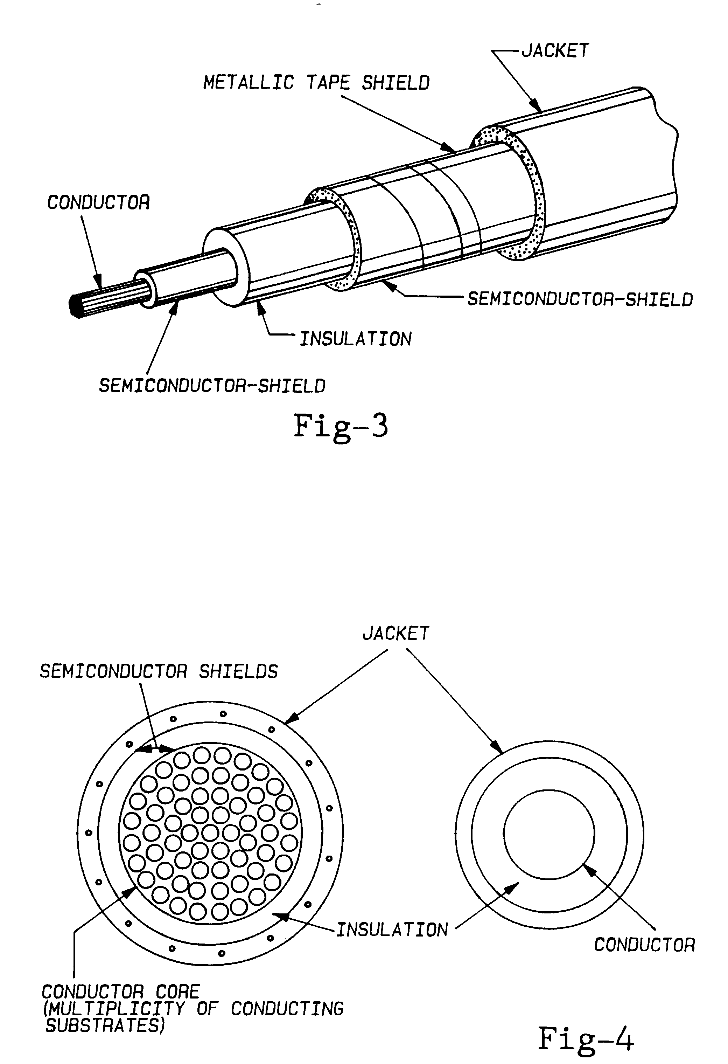

The device of the present invention may take on any form that is suitable for the use to which it will serve. The components of the devices of the present invention, i.e. the insulating, semiconducting, and conducting members, can be arranged relative to each other in a wide variety of ways, depending upon the desired use of the device. Generally, the insulating member must be arranged so that it will function as an insulator of the conducting or semiconducting member. For example, the various components may be: affixed together, in proximity to each other, in contact with each other, adjacent to each other, or one may substantially surround another. Generally in the power cable field, the device will comprise a conducting core of one or more electrically conducting substrates that is substantially surrounded by one or more layers of insulators and/or semiconductor shields. FIG. 3 is an illustration of a typical power cable, which shows a multiplicity of conducting substrates comprising the conductive core that is substantially surrounded by several protective layers that are either jackets, insulators or semiconductive shields. FIG. 4(a) is a cross-sectional view of a typical medium voltage power cable, showing a conductor core comprising a multiplicity of conducting substrates, a first semiconducting shield layer, an insulation layer, a second semiconducting shield layer, and a jacket. FIG. 4(b) is a cross-sectional view of a typical low voltage power cable showing a conductor substantially surrounded by insulation and jacket layers. While the present invention is of greatest advantage in low and medium voltage applications where water treeing is most common, it is also useful in high voltage applications.

Traditionally, the jacketing materials normally employed in power cables comprise neoprene over EPR insulated cables, and polyvinyl chloride (PVC) over polyethylene insulated cables. According to this invention, not only is the polymer of the present invention suitable for the insulating and shielding layers, it may also be utilized in the jacket layer.

All of the components of the compositions utilized in the present invention are usually blended or compounded together prior to their introduction into an extrusion device from which they are to be extruded onto an electrical conductor. The polymer and the other additives and fillers may be blended together by any of the techniques used in the art to blend and compound such mixtures to homogeneous masses. For instance, the components may be fluxed on a variety of apparatus including multi-roll mills, screw mills, continuous mixers, compounding extruders and Banbury mixers.

After the various components of the composition to be utilized are uniformly admixed and blended together, they are further processed to fabricate the devices of the present invention. Prior art methods for fabricating polymer insulated cable and wire are well known, and fabrication of the devices of the present invention may generally be accomplished by any of the various extrusion methods.

In a typical extrusion method, an optionally heated conducting core to be coated is pulled through a heated extrusion die, generally a cross-head die, in which a layer of melted polymer is applied to the conducting core. Upon exiting the die, the conducting core with the applied polymer layer is passed through a cooling section, generally an elongated cooling bath, to harden. Multiple polymer layers may be applied by consecutive extrusion steps in which an additional layer is added in each step, or with the proper type of die, multiple polymer layers may be applied simultaneously.

The conductor of the present invention may generally comprise any suitable electrically conducting material, although generally electrically conducting metals are utilized. Preferably, the metals utilized are copper or aluminum. In power transmission, aluminum conductor/steel reinforcement (ACSR) cable, aluminum conductor/aluminum reinforcement (ACAR) cable, or aluminum cable is generally preferred.

### REFERENTIAL EXAMPLES

In order to provide a better understanding of the present invention including representative advantages thereof, the following referential examples are offered as related to actual tests performed in the practice of this invention, and illustrate the surprising and unexpected properties of the electrical device of this present invention.

The ethylene/alpha-olefin copolymers suitable for use in the present invention may be prepared as shown in Example I. The diolefin containing terpolymer utilized in the present invention may be prepared as shown in Examples II and III.

### EXAXPLE I

### Preparation of ethylene/alpha-olefin copolymers

A catalyst is prepared by adding 5.1 liters of a 10% solution of trimethylaluminum in heptane into a dry and oxygen-free two-gallon reactor equipped with a mechanical stirrer. A 800 g sample of undehydrated silica gel, containing 12.3% water, is then added into the reactor. After the addition is complete, the mixture is stirred at ambient temperature for one hour. A 20 g sample of di-(n-butylcyclopentadienyl) zirconium dichloride slurried in 30 1(liters) of heptane is then added into the reactor and the mixture is allowed to react at ambient temperature for 30 minutes. The reactor is then heated to 65°C, while a nitrogen gas is purged through the reactor to remove the solvent. The nitrogen purging is stopped when the mixture in the reactor turns into a free-flowing powder.

The polymerization was conducted in a 16-inch diameter fluidized gas phase reactor. Ethylene, butene-1 and nitrogen were fed continuously into the reactor to maintain a constant production rate. Product was periodically removed from the reactor to maintain the desired bed weight. The polymerization conditions are shown in Table I below.

**TABLE I**

| Gas Phase Polymerization | | | |
|---|---|---|---|
| | A | B | C |
| Temperature (°F) | 121 (49°C) | 110 (43°C) | 145 (63°C) |
| Total Pressure (psia) | 300 (207 kPa) | 300 (207 kPa) | 300 (207 kPa) |
| Gas Velocity (ft/sec) | 1.55 (0,47 m/sec) | 1.85 (0,56 m/sec) | 1.70 (0,52 m/sec) |
| Catalyst Feed Rate (g/hr) | 3.0 | 3.5 | 8.9 |
| Butene-1 Feed Rate (lb/hr) | 5.8 (2,6 kg/h) | 6.0 (2,7 kg/h) | 5.8 (2,6 kg/h) |
| Production Rate (lb/hr) | 33 (15 kg/h) | 33 (15 kg/h) | 28 (12,7 kg/h) |

The polymerized products "A", "B" and "C" are useful for use in the present invention and had characterizing properties as shown in Table II below:

**TABLE II**

| Characterization Data | | | |
|---|---|---|---|
| | A | B | C |
| Melt Index (dg/min) | 3.3 | 9.5 | 9.0 |
| Density (g/cm³) | 0.882 | 0.88 | 0.895 |
| Mₙ | 41380 | 27910 | 31450 |
| M_{w} | 78030 | 58590 | 62670 |
| M_{w}/Mₙ | 1.89 | 2.10 | 1.99 |
| Note: Mₙ is number average molecular weight. M_{w} weight average molecular weight. Both determined via the technique of Gel Permeation Chromatography, a well accepted procedure. | | | |

It will be recognized by persons skilled in the art, that products with different Melt Indices and Densities to A, B, and C above can be obtained by changing the process conditions. Additionally, the composition of the products can be altered, depending on the choice of alpha-olefin comonomer used.

### EXAMPLE II

### Preparation of diolefin-containing copolymers

A catalyst is prepared by adding 2.7 liters of a 10% solution of methylalumoxane (MAO) in toluene into a dry and oxygen-free two-gallon reactor equipped with a mechanical stirrer. A 800 g sample of silica gel, dried at 800°C is slowly added into the reactor. After the addition is complete, the mixture is stirred at 65°C for one hour. A 20 g sample of bis-indenyl zirconium dichloride dissolved in 30 liters of toluene is then added into the reactor and the mixture is allowed to react at 65°C for 30 minutes. Nitrogen gas is then purged through the reactor to remove the solvent. The nitrogen purging is stopped when the mixture in the reactor turns into a free-flowing powder.

The polymerization was conducted in a 16-inch diameter fluidized gas phase reactor. Ethylene, 1-4 hexadiene, butene-1 and nitrogen were fed continuously into the reactor to maintain a constant production rate. Product was periodically removed from the reactor to maintain the desired bed weight. The polymerization conditions are shown in Table III below.

**TABLE III**

| Gas Phase Polymerization | | |
|---|---|---|
| | D | E |
| Temperature (°F) | 136 (58°C) | 136 (58°C) |
| Total Pressure (psia) | 300 (207 kPa) | 300 (207 kPa) |
| Gas Velocity (ft/sec) | 1.86 (0,57 m/sec) | 1.85 (0,56 m/sec) |
| Catalyst Feed Rate (g/hr) | 15 | 15 |
| Butene-1 Feed Rate (lb/hr) | 5.5 (2,5 kg/h) | 4.8 (2,2 kg/h) |
| 1-4 Hexadiene Feed Rate (lb/hr) | 0.7 (0,3 kg/h) | 0.5 (0,2 kg/h) |
| Production Rate (lb/hr) | 19 (8,6 kg/h) | 15 (6,8 kg/h) |

Polymerized product D had a Melt Index of 6, a density of 0.893 g/cm³ and a 2.1 mole % level of incorporated 1-4 hexadiene. Polymerized product E had a Melt Index of 5.5, a density of 0.897 g/cm³ and a 1.3 mole % level of incorporated 1,4 hexadiene.

It will be recognized by persons skilled in the art that products with different Melt Indices, Densities and levels of incorporated 1,4 hexadiene to D and E above, can be obtained by changing the process conditions. Additionally, the composition of the products can be altered, depending on the choice of alpha olefin comonomer used.

### EXAMPLE III

### Preparation of diolefin-containing copolymer

A catalyst is prepared by adding 5.1 liters of a 10% solution of trimethylaluminum in heptane into a dry and oxygen-free two-gallon reactor equipped with a mechanical stirrer. A 800 g sample of undehydrated silica gel, containing 12.3% water, is slowly added into the reactor. After the addition is complete, the mixture is stirred at ambient temperature for one hour. A 20 g sample of bis-indenyl zirconium dichloride slurried in 30 liters of heptane is then added into the reactor and the mixture is allowed to react at ambient temperature for 30 minutes. The reactor is then heated to 65°C, while the nitrogen gas is purged through the reactor to remove the solvent. The nitrogen purging is stopped when the mixture in the reactor turns into a free-flowing powder.

The polymerization was conducted in a 16-inch diameter fluidized gas phase reactor. Ethylene, 1-4 hexadiene, butene-1 and nitrogen were fed continuously into the reactor to maintain a constant production rate. Product was periodically removed from the reactor to maintain the desired bed weight. The polymerization conditions are shown in Table IV below.

**TABLE IV**

| Gas Phase Polymerization | |
|---|---|
| | E |
| Temperature (°F) | 117 (47°C) |
| Total Pressure (psia) | 300 (207 kPa) |
| Gas Velocity (ft/sec) | 1.81 (0,55 m/sec) |
| Catalyst Feed Rate (g/hr) | 14.5 |
| Butene-1 Feed Rate (lb/hr) | 3.4 (1,5 kg/h) |
| 1-4 Hexadiene Feed Rate (lb/hr) | 0.65 (0,3 kg/h) |
| Production Rate (lb/hr) | 11 (5 kg/h) |

Polymerized product F had a Melt Index of 2.5 and a density of 0.887 g/cm³ and a 2.0 mole % level of incorporated 1-4 hexadiene. As mentioned previously, products with different melt indices, densities and levels of 1-4 hexadiene can be obtained by changing the process conditions. Additionally, the composition of the products can be altered depending on the choice of alpha olefin comonomers used.

### EXAMPLE IV

In this Example, Polymer C, a polymer described as being useful in the present invention is compared against 2 commercial LDPE homopolymers [Exxon's LD-400 and LD-411] that are representative of the polyethylene used to make XLPE power cable insulation. All polymers were tested unfilled and crosslinked (via dicumyl peroxide).

It is well known to those of skill in the art that unfilled LDPE has outstanding dielectric properties, superior to those of EP elastomers (i.e. EPR or EPDM) whether neat or filled. The data in TABLE V shows the dielectric performance of POLYMER C ta that displayed by LDPE.

**TABLE V**

| Dielectric Properties (Unfilled Polymers) | | | |
|---|---|---|---|
| | **POLYMER C** | **LDPE** | **LDPE** |
| | | Homopolymer (2.3 MI,0.921D) | Homopolymer (2.3 MI,0.921D) |
| DICUP R | 2.6 | 2.6 | 2.6 |

| **ELECTRICAL PROPERTIES** | | | |
|---|---|---|---|
| DIELECTRIC CONSTANT | | | |
| + ORIGINAL | 2.30 | 2.37 | 2.37 |
| + 1 DAY/90C WATER | 2.00 | 2.16 | 2.16 |
| + 7 DAYS/90C WATER | 1.92 | 2.15 | 2.14 |
| + 14 DAYS/90C WATER | 1.92 | 2.14 | 2.12 |
| + ORIGINAL POWER FACTOR | 0.00053 | 0.00057 | 0.00056 |
| + 1 DAY/90C WATER | 0.00060 | 0.00054 | 0.00055 |
| + 7 DAYS/90C WATER | 0.00063 | 0.00056 | 0.00062 |
| + 14 DAYS/90C WATER | 0.00069 | 0.00056 | 0.00064 |

### EXAMPLE V

In this Example, dielectric properties were remeasured for four Superohm 3728 type formulations (at 0, 30, 60 and 100 parts filler as shown in TABLE VI). The data in TABLE VII shows the gradual deterioration in the dielectric performance with increasing filler loading. Commercially available filled compounds based on EP elastomers vary in filler loading from about 30 parts (20 wt%) to about 110 parts (47 wt%), depending on requirements for product extrudeability, dielectric performance, tree retardance performance, physical properties, as well as other requirements. The polymers utilized in this invention that display inherently good tree retardance allow compound formulation with less filler, thereby allowing a more favorable balance of dielectric, tree retardant and physical properties to be achieved.

**TABLE VI**

| Filled Insulation Formulations | |
|---|---|
| POLYMER | - Ethylene/Butene-1 Copolymer |
| | - 2.0 Melt Index |
| | - 0.8971 G/CM³ Density |
| | - Similar to Polymer C, but lower Melt Index |
| FORMULATIONS | SUPEROHM 3728 Type Formulation, |
| | But at 0, 30, 60 and 100 Parts |
| | Filler (TRANSLINK - 37, i.e. calcined clay) |
| | per 100 parts of Polymer |
| NOTE: -SUPEROHM 3728 is a well regarded filled EP-based electrical insulation compound. -TRANSLINK-37 is a calcined clay and is a widely used filler used in filled electrical insulation compounds. | |

**TABLE VII**

| Dielectric Properties of Filled Insulation Formulations | | | | |
|---|---|---|---|---|
| | (0 Parts Filler) | (30 Parts Filler) | (60 Parts Filler) | (100 Parts Filler) |
| **ORIGINAL** | | | | |
| Dielectric Constant | 2.281 | 2.488 | 2.631 | 2.836 |
| Power Factor | 0.00130 | 0.00245 | 0.00300 | 0.00399 |
| Vol. Resist (10¹⁵OHM-CM) | 38 | 4.9 | 4.7 | 3.0 |

| **AGED 24H WATER 90 C** | | | | |
|---|---|---|---|---|
| Dielectric Constant | 2.225 | 2.436 | 2.543 | 2.776 |
| Power Factor | 0.00170 | 0.00221 | 0.00262 | 0.00323 |
| Vol. Rest. (10¹⁵ OHM-CM) | 13 | 3.2 | 7.5 | 1.8 |

### EXAMPLE VI

In this Example, polymers useful as insulating and semiconducting materials, are compared against commercially available polymers.

The data show polymers of this invention provide a favorable balance of dielectric properties, tree rating, and physical properties vis-a-vis, unfilled crosslinked polyethylene (0.920 density, 2.8 MI, homopolymer and filled EPR.

**TABLE VIII**

| Evaluation of Insulation Formulations | | | | | | |
|---|---|---|---|---|---|---|
| | 1 Unfilled Crosslinked LDPE | 2* Filled Crosslinked EP I | 3** Filled Crosslinked EP II | 4* Filled Crosslinked Polymer A | 5 Unfilled Crosslinked Polymer F | 6* Filled Crosslinked Polymer D |
| **DIELECTRIC PROPERTIES** | | | | | | |
| Dielectric Strength | 775 | 750 | 725 | 700 | 775 | 720 |
| (V/MIL) | | | | | | |
| Dielectric Constant | | | | | | |
| - Original | 2.37 | 2.76 | 2.85 | 2.71 | 2.32 | 2,70 |
| - Aged 24Hr/90°C Water | 1.16 | 2.51 | 2.7 | 2.44 | 2.05 | 2.50 |
| Power Factor | | | | | | |
| - Original | 0.00030 | 0.0021 | 0.004 | 0.0024 | 0.00026 | 0.0025 |
| - Aged 24Hr/90°C Water | 0.00034 | 0.0064 | 0.008 | 0.0063 | 0.00026 | 0.0065 |

| **TREEING PERFORMANCE** | | | | | | |
|---|---|---|---|---|---|---|
| Tree Retardance Rating | 68 | 1-5 | 15-20 | 15-35 | 5-10 | 5-10 |
| (100 x L/T) | | | | | | |

| **PHYSICAL PROPERTIES** | | | | | | |
|---|---|---|---|---|---|---|
| Tensile Strength in PSI (MPa in brackets) | | | | | | |
| - Original | 2300 (15.87) | 1710 (11.80) | 1300 (8.97) | 2555 (17.63) | 2475 (17.08) | 2700 (18.63) |
| - Aged 7 days (C) | 136 | 150 | 150 | 150 | 150 | 150 |
| - % Retained on Aging | 95 | 100 | 100 | 100 | 98 | 98 |
| Elongation (%) | | | | | | |
| - Original | 525 | 320 | 300 | 405 | 540 | 370 |
| - Aged 7 days (C) | 136 | 150 | 150 | 150 | 150 | 150 |
| - % Retained on Aging | 95 | 94 | 90 | 92 | 98 | 90 |

| | | | | | | |
|---|---|---|---|---|---|---|
| * Typical Superohm type formulation. | | | | | | |
| ** Alternative commercial EP formulation with a minimal stabilization package. | | | | | | |

### EXAMPLE VII

In this Example, polymers suitable for use in the present invention are compared against various commercially available polymers for tree retardancy. As was explained above, the tree rating as utilized in the present invention is determined according to the method of Bulinski, et al., Water *Treeing* in a *Heavily Oxidized Cross-linked Polyethylene Insulation,* Sixth International Symposium On High Voltage Engineering, New Orleans (August 28 -September 1, 1989). The general method is as follows. A 75 mil (0.1905 cm) plaque of the material to be tested is pressed at 175°C and then cut into 1 inch (2.54 cm) diameter circles. Three small areas are sandblasted onto the surface of the circles to accelerate tree initiation. The samples were stressed for 3,500 hours at 6kV, 1000HZ at 75°C, in contact with 0.1N NaCl solution, using an apparatus as shown in FIG. 1. The degree of treeing was determined by slicing the sample vertically through two of the sandblasted areas and then measuring the length of the trees relative to the thickness of the sample (stress is proportional to the thickness). FIG. 2 is a representation of the method for analyzing the tree retardancy test samples. Tree rating data is presented in TABLE IX below.

In TABLE IX, the polymers suitable to be utilized in this invention are referred to by the tradename EXACT, or by the polymer designation from Examples 1-3. The commercially available EXACT polymers are referred by product number. Those EXACT polymers not having a product number, are pilot plant samples.

**TABLE IX**

| **NRC TREE RETARDANCY DATA** **(Sorted by Length/Thickness (x100))** | | |
|---|---|---|
| Sample* L/T (x100) | | |
| 32 | LDPE (50)/Semicrystalline EP(50)/Translink37 (25) | 0 |
| 21 | Commercial Filled MV Insulation Compound | 0 |
| 22 | Commercial Filled MV Insulation Compound | 0 |
| 14 | Amorphous EP | 7 |
| 17 | POLYMER F | 8 |
| 33 | LDPE(50)/Semicrystalline EP(50)/Translink37 (50) | 9 |
| 10 | Commercial XLPE | 9 |
| 15 | Amorphous EP(100)/Translink 37(30) | 11 |
| 9 | POLYMER C | 16 |
| 4 | MDV 87-31 (in commercial MV EP insulation formulation) | 16 |
| 19 | Commercial tree retardant XLPE | 16 |
| 16 | Amorphous EP (100)/Translink 37(60) | 16 |
| 5 | Semi-crystalline EP copolymer/Flexon/Translink 37(101) | 16 |
| 31 | LD180 50/Semicrystalline EP(50) | 19 |
| 1 | EMS 4003 (SLP D=0.895, MI=9, C₂=/C₄=) | 20 |
| 11 | Commercial LLDPE | 20 |
| 6 | Commercial tree retardant XLPE | 22 |
| 13 | Amorphous EP | 25 |
| 12 | EXACT (D=0.939,MI=7,C₂=/C₄=) | 33 |
| 7 | POLYMER C | 33 |
| 8 | POLYMER A | 36 |
| 23 | EXACT (D=0.884, MI=1.7,C₂=/C₃=) | 39 |
| 3 | Commercial LDPE | 46 |
| 30 | LDPE(60)/Semicrystalline EP (40) | 46 |
| 25 | EXACT (D=0.885, MI=4, C₂=/C₆=) | 58 |
| 18 | Commercial XLPE | 68 |
| 27 | LDPE(90)/Semicrystalline EP(10) | 69 |
| 28 | LD180 80/Semicrystalline EP(20) | 70 |
| 24 | EXP314(D=0.886, MI=5,C₂=/C₄=) | 70 |
| 2 | POLYMER C | 70 |
| 26 | Commercial LDPE | 98 |
| 29 | LDPE(70)/Semicrystalline EP(30) | 98 |

| | | |
|---|---|---|
| * All samples were crosslinked with Dicup R and contain a minimal stabilization package. | | |

### EXAMPLE VIII

In this Example, the crosslinkability of the polymers utilized in the present invention are compared to commercially available polymers. The polymers were crosslinked with both dicumyl peroxide and with radiation.

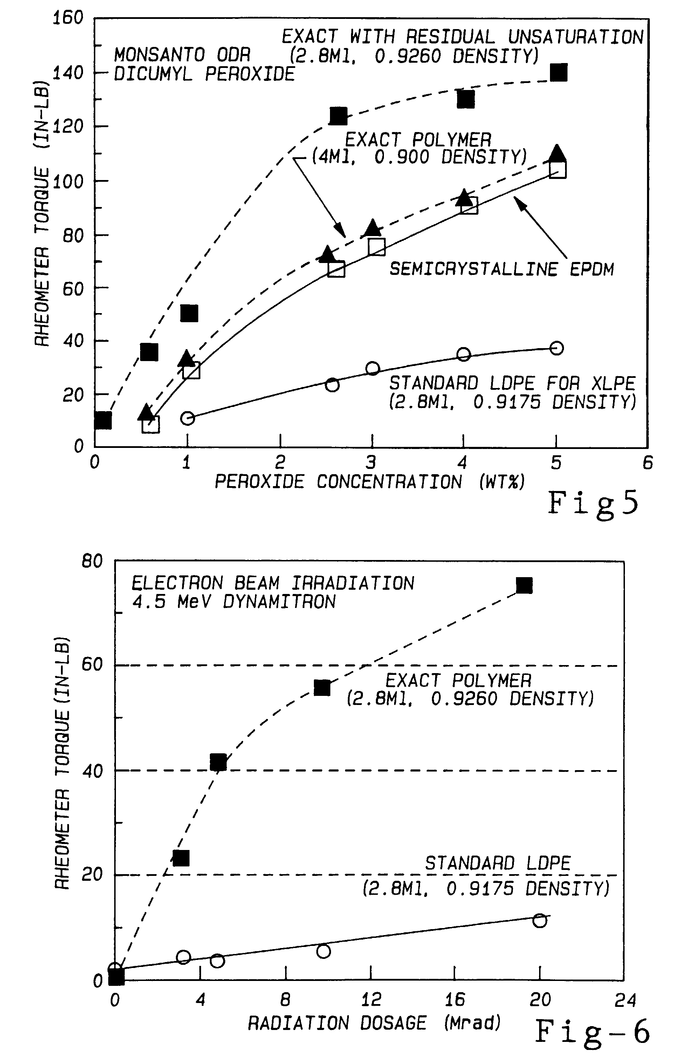

The peroxide response of the polymers of the present invention (including diolefin-containing polymers which provide residual olefinic unsaturation) compared to semicrystalline EPDM and a standard LDPE are shown in FIG. 5. In FIG. 5 the polymers useful in this invention are designated by the tradename "EXACT". This figure shows that in an environment of equivalent peroxide levels, the polymers utilized in the present invention will have a greater response, as evidenced by greater torque values.

The radiation response of the polymers of the present invention compared to LDPE is shown in FIG. 6. In FIG. 6, the polymer useful in the present invention is designated by the tradename "EXACT". As can be seen in FIG 6, the polymers utilized in the present invention show a greater response to radiation relative to LDPE as measured by levels of torque.

While the present invention has been described and illustrated by reference to particular embodiments thereof, it will be appreciated by those of ordinary skill in the art that the invention lends itself to variations not necessarily illustrated herein. For instance, the polymers useful in this present invention can be made using mixed transition metal metallocene catalyst systems. For this reason, then, reference should be made solely to the appended claims for the purposes of determining the true scope of the present invention.

## Claims

1. An electrically conductive device having reduced treeing said device comprising an electrically conductive member comprising at least one electrically conductive substrate; and
(i) at least one member for electrically insulating the electrically conductive member; or
(ii) at least one semiconductive member in proximity to the electrically conductive member: or
(iii) at least one protective layer substantially surrounding and supported by the electrically conductive member, wherein (i), (ii), or (iii) comprises a polymer selected from the group consisting of ethylene polymerized with at least one comonomer selected from the group consisting of C₃ to C₂₀ alpha-olefins and C₃ to C₂₀ polyenes, and wherein the polymer has a density in the range of 0.86 g/cm³ to 0.96 g/cm³, a melt index (ASTM D-1238) in the range of from 0.2 dg/min. to 100 dg/min., a molecular weight distribution in the range of from 1.5 to 30, and a composition distribution breadth index greater than 45 percent and obtainable through to use of a metallocene catalyst.

2. The device in accordance with claim 1 wherein the polymer comprises an ethylene/C₃ to C₂₀ alpha-olefin copolymer or an ethylene/C₃ to C₂₀ alpha-olefin/C₃ to C₂₀ diene terpolymer and preferably an ethylene/butene-1, ethylene/hexene-1, ethylene/octene-1, or ethylene/propylene copolymer or an ethylene/propylene-1,4-hexadiene or ethylene/butene-1/1,4-hexadiene terpolymer.

3. The device in accordance with any preceding claim wherein the polymer comprises from 68 mole percent to 99 mole percent ethylene based on the moles of monomer, preferably from 73 mole percent to 98 mole percent ethylene based on the moles of monomer and especially from 75 mole percent to 94 mole percent ethylene based on the moles of monomer.

4. The device in accordance with any preceding claim wherein the polymer comprises a filler, preferably in an amount of up to 50 weight percent, based on the weight of polymer and filler, said filler being conductive preferably carbon black or nonconductive.

5. The device in accordance with any preceding claims wherein the polymer is crosslinked, preferably with a peroxide, with a hydrolized silane or with radiation.

6. The device in accordance with any preceding claim wherein the polymer has a density in the range of 0.865 g/cm³ to 0.93 g/cm³, and/or melt index in the range of 1 dg/min. to 50 dg/min., and/or a molecular weight distribution in the range of 1.7 to 10, and/or a composition distribution breadth index greater than 50 percent and preferably a density in the range of 0.87 g/cm³ to 0.91 g/cm³, and/or a melt index in the range of 3 dg/min. to 30 dg/min., and/or a molecular weight distribution in the range of 1.8 to 3.5, and/or a composition distribution breadth index greater than 60 percent.

7. The device in accordance with any preceding claim wherein the polymer has a tree rating less than 40, and/or a power factor in the range of 0.0002 to 0.0005, and/or a dielectric constant in the range of 1.8 to 2.4 and has preferably a tree rating less than 40, a power factor in the range of 0.0002 to 0.0005, and a dielectric constant in the range of 1.8 to 2.4, and comprises the at least one protective layer (iii).

8. The device in accordance with any preceding claim wherein the at least one protective layer comprises a first shield layer adjacent the conductive member, an insulation layer adjacent the first shield layer, a second shield layer adjacent the insulation layer, and a jacket layer adjacent the second shield layer.

9. The device in accordance with any of claims 1 to 7 wherein the at least one protective layer comprises an insulation layer adjacent the conductive member and a jacket layer adjacent the insulation layer.

10. The device in accordance with any of claims 1 to 7 wherein the polymer has a tree rating less than 25 preferably less than 10, a power factor in the range of 0.0002 to 0.0005, and a dielectric constant in the range of 1.8 to 2.4 and comprises the at least one electrically insulating member (i) or wherein the polymer has a tree rating less than 15, preferably less than 10, a power factor in the range of 0.0002 to 0.0005, and a dielectric constant in the range of 1.8 to 2.4, and comprises the at least one semiconducting member (ii).

11. The device in accordance with any preceding claim wherein the conductive member comprises aluminum, copper or steel or a semiconductive member comprising at least one electrically semiconductive substrate, optionally with the semiconductive member comprising a polymer as defined in any one of claims 1-8 incorporating a conductive filler preferably carbon black.

12. Use of a polymeric insulating member which comprises [from Claim 1] to provide a free retardance rating as defined herein of less than 40.

13. Use according to Claim 12 in which the polymer has a power factor of from 0.0002 to 0.0005 and a dielectric constant of from 1.8 to 2.4.

14. Use according to Claim 12 or 13 in the polymer contains no treeing inhibitor.

## Patentansprüche

1. Elektrisch leitende Vorrichtung mit verringerter Verästelung, wobei die Vorrichtung ein elektrisch leitendes Teil umfaßt, das mindestens ein elektrisch leitendes Substrat und
(i) mindestens ein Teil zum elektrischen Isolieren des elektrisch leitenden Teils, oder
(ii) mindestens ein Halbleiterteil in der Nähe des elektrisch leitenden Teils oder
(iii) mindestens eine Schutzschicht umfaßt, die das elektrisch leitende Teil im wesentlichen umgibt und von diesem gehalten wird, wobei (i), (ii) oder (iii) ein Polymer ausgewählt aus der Gruppe bestehend aus Ethylen polymerisiert mit mindestens einem Comonomer ausgewählt aus der Gruppe bestehend aus C₃- bis C₂₀-α-Olefinen und C₃- bis C₂₀-Polyenen umfaßt, wobei das Polymer eine Dichte im Bereich von 0,86 bis 0,96 g/cm³, einen Schmelzindex (ASTM D-1238) im Bereich von 0,2 dg/Min bis 100 dg/Min, eine Molekulargewichtsverteilung im Bereich von 1,5 bis 30 und einen Breitenindex der Zusammensetzungsverteilung von mehr als 45 % aufweist und durch Verwendung eines Metallocenkatalysators erhältlich ist.

2. Vorrichtung nach Anspruch 1, bei der das Polymer ein Ethylen/C₃- bis C₂₀-α-Olefin-Copolymer oder ein Ethylen/C₃- bis C₂₀-α-Olefin/C₃- bis C₂₀-Dien-Terpolymer und vorzugsweise ein Ethylen/Buten-1-, Ethylen/Hexen-1-, Ethylen/Octen-1- oder Ethylen/Propylen-Copolymer oder ein Ethylen/Propylen/1,4-Hexadien- oder Ethylen/Buten-1/1,4-Hexadien-Terpolymer umfaßt.

3. Vorrichtung nach einem der vorhergehenden Ansprüche, bei der das Polymer 68 Mol.% bis 99 Mol.% Ethylen, bezogen auf die Mol an Monomer, vorzugsweise 73 Mol.% bis 98 Mol.% Ethylen, bezogen auf die Mol an Monomer, und insbesondere 75 Mol.% bis 94 Mol.% Ethylen, bezogen auf die Mol an Monomer, umfaßt.

4. Vorrichtung nach einem der vorhergehenden Ansprüche, bei der das Polymer einen Füllstoff, vorzugsweise in einer Menge von bis zu 50 Gew.%, bezogen auf das Gewicht von Polymer und Füllstoff, umfaßt, wobei der Füllstoff leitfähig ist, vorzugsweise Ruß, oder nicht leitfähig ist.

5. Vorrichtung nach einem der vorhergehenden Ansprüche, bei der das Polymer vernetzt ist, vorzugsweise mit einem Peroxid, mit einem hydrolysierten Silan oder durch Strahlung.

6. Vorrichtung nach einem der vorhergehenden Ansprüche, bei der das Polymer eine Dichte im Bereich von 0,865 g/cm³ bis 0,93 g/cm³ und/oder einen Schmelzindex im Bereich von 1 dg/Min bis 50 dg/Min und/oder eine Molekulargewichtsverteilung im Bereich von 1,7 bis 10 und/oder einen Breitenindex der Zusammensetzungsverteilung von mehr als 50 % und vorzugsweise eine Dichte im Bereich von 0,87 g/cm³ bis 0,91 g/cm³ und/oder einen Schmelzindex im Bereich von 3 dg/Min bis 30 dg/Min und/oder eine Molekulargewichtsverteilung im Bereich von 1,8 bis 3,5 und/oder einen Breitenindex der Zusammensetzungsverteilung von mehr als 60 % aufweist.

7. Vorrichtung nach einem der vorhergehenden Ansprüche, bei der das Polymer eine Verästelungsbewertung von weniger als 40 und/oder einen Leistungsfaktor im Bereich von 0,0002 bis 0,0005 und/oder eine Dielektrizitätskonstante im Bereich von 1,8 bis 2,4 aufweist und vorzugsweise eine Verästelungsbewertung von weniger als 40, einen Leistungsfaktor im Bereich von 0,0002 bis 0,0005 und/oder eine Dielektrizitätskonstante im Bereich von 1,8 bis 2,4 aufweist und die mindestens eine Schutzschicht (iii) umfaßt.

8. Vorrichtung nach einem der vorhergehenden Ansprüche, bei der die mindestens eine Schutzschicht eine erste Abschirmungsschicht neben dem leitenden Teil, eine Isolierungsschicht neben der ersten Abschirmungsschicht, eine zweite Abschirmungsschicht neben der Isolierschicht und eine Mantelschicht neben der zweiten Abschirmungsschicht umfaßt.

9. Vorrichtung nach einem der Ansprüche 1 bis 7, bei der die mindestens eine Schutzschicht eine Isolierschicht neben dem leitenden Teil und eine Mantelschicht neben der Isolierschicht umfaßt.

10. Vorrichtung nach einem der Ansprüche 1 bis 7, bei der das Polymer eine Verästelungsbewertung von weniger als 25, vorzugsweise weniger als 10, einen Leistungsfaktor im Bereich von 0,0002 bis 0,0005 und eine Dielektrizitätskonstante im Bereich von 1,8 bis 2,4 aufweist und das mindestens eine elektrisch leitendes Teil (i) umfaßt oder bei der das Polymer eine Verästelungsbewertung von weniger als 15, vorzugsweise weniger als 10, einen Leistungsfaktor im Bereich von 0,0002 bis 0,0005 und eine Dielektrizitätskonstante im Bereich von 1,8 bis 2,4 aufweist und das mindestens eine Halbleiterteil (ii) umfaßt.

11. Vorrichtung nach einem der vorhergehenden Ansprüche, bei der das leitende Teil Aluminium, Kupfer oder Stahl oder ein Halbleiterteil umfaßt, das mindestens ein elektrisch halbleitendes Substrat umfaßt, wobei gegebenenfalls das Halbleiterteil ein Polymer gemäß einem der Ansprüche 1 bis 8 umfaßt, das einen leitenden Füllstoff, vorzugsweise Ruß, eingebaut hat.

12. Verwendung eines polymeren Isolierteils gemäß Anspruch 1, um eine freie Retardanzbewertung wie hier definiert von weniger als 40 zu liefern.

13. Verwendung nach Anspruch 12, bei der das Polymer einen Leistungsfaktor von 0,0002 bis 0,0005 und eine Dielektrizitätskonstante von 1,8 bis 2,4 hat.

14. Verwendung nach Anspruch 12 oder 13 in einem Polymer, das keinen Verästelungshemmstoff enthält.

## Revendications

1. Dispositif électriquement conducteur présentant une formation d'arborescence réduite, ledit dispositif comprenant un élément électriquement conducteur comprenant au moins un substrat électriquement conducteur, et
(i) au moins un élément pour isoler électriquement l'élément électriquement conducteur ; ou
(ii) au moins un élément semiconducteur à proximité de l'élément électriquement conducteur ; ou
(iii) au moins une couche protectrice entourant essentiellement et portée par l'élément électriquement conducteur, dans lequel le constituant (i), (ii) ou (iii) comprend un polymère choisi dans le groupe consistant en un polymère obtenu par polymérisation d'éthylène avec au moins un comonomère choisi dans le groupe consistant en alpha-oléfines en C₃ à C₂₀ et des polyènes en C₃ à C₂₀, ce polymère ayant une masse volumique comprise dans l'intervalle de 0,86 g/cm³ à 0,96 g/cm³, un indice de fluidité (ASTM D-1238) compris dans l'intervalle de 0,2 dg/min à 100 dg/min, une distribution des poids moléculaires comprise dans l'intervalle de 1,5 à 30 et un indice d'étendue de distribution de composition supérieur à 45 pour cent et pouvant être obtenu en utilisant un catalyseur à base d'un métallocène.

2. Dispositif suivant la revendication 1, dans lequel le polymère comprend un copolymère éthylène/alpha-oléfine en C₃ à C₂₀ ou un terpolymère éthylène/alpha-oléfine en C₃ à C₂₀/diène en C₃ à C₂₀ et, de préférence, un copolymère éthylène/butène-1, éthylène/hexène-1, éthylène/octène-1 ou éthylène/propylène ou un terpolymère éthylène/propylène/1,4-hexadiène ou éthylène/butène-1-/1,4-hexadiène.

3. Dispositif suivant l'une quelconque des revendications précédentes, dans lequel le polymère comprend 68 moles pour cent à 99 moles pour cent d'éthylène sur la base du nombre de moles de monomère, de préférence 73 moles pour cent à 98 moles pour cent d'éthylène sur la base du nombre de moles de monomère et notamment 75 moles pour cent à 95 moles pour cent de d'éthylène sur la base du nombre de moles de monomère.

4. Dispositif suivant l'une quelconque des revendications précédentes, dans lequel le polymère comprend une charge, de préférence en une quantité allant jusqu'à 50 pour cent en poids, sur la base du poids du polymère et de la charge, ladite charge étant conductrice, de préférence le noir de carbone, ou non conductrice.

5. Dispositif suivant l'une quelconque des revendications précédentes, dans lequel le polymère est réticulé, de préférence au moyen d'un peroxyde, avec un silane hydrolysé sous l'action d'un rayonnement.

6. Dispositif suivant l'une quelconque des revendications précédentes, dans lequel le polymère a une masse volumique comprise dans l'intervalle de 0,865 g/cm³ et 0,93 g/cm³, et/ou un indice de fluidité compris dans l'intervalle de 1 dg/min à 50 dg/min, et/une distribution des poids moléculaires comprise dans l'intervalle de 1,7 à 10, et/ou un indice d'étendue de distribution de composition supérieur à 50 pour cent, et de préférence une masse volumique comprise dans l'intervalle de 0.87 g/cm³ et 0,91g/cm³, et/ou indice de fluidité compris dans l'intervalle de 3 dg/min à 30 dg/min, et/ou une distribution des poids moléculaires comprise dans l'intervalle de 1,8 à 3,5, et/ou un indice d'étendue de distribution de composition supérieur à 60 pour cent.

7. Dispositif suivant l'une quelconque des revendications précédentes, dans lequel le polymère présente un taux de formation d'arborescence inférieur à 40, et/ou un facteur de puissance compris dans l'intervalle de 0,0002 à 0,0005, et/ou une constante diélectrique comprise dans l'intervalle de 1,8 à 2,4, et a de préférence un taux de formation d'arborescence inférieur à 40, un facteur de puissance compris dans l'intervalle de 0,0002 à 0,0005, et une constante diélectrique comprise dans l'intervalle de 1,8 à 2,4, et comprend la couche protectrice (iii) présente en au moins un exemplaire.

8. Dispositif selon l'une quelconque des revendications précédentes, dans lequel la couche protectrice présente en au moins un exemplaire comprend une première couche de blindage adjacente à l'élément conducteur, une couche isolante adjacente à la première couche de blindage, une seconde couche de blindage adjacente à la couche isolante, et une couche de gainage adjacente à la seconde couche de blindage.

9. Dispositif selon l'une quelconque des revendications 1 à 7, dans lequel la couche protectrice présente en au moins un exemplaire comprend une couche isolante adjacente à l'élément conducteur et une couche de gainage adjacente à la couche isolante.

10. Dispositif suivant l'une quelconque des revendications 1 à 7, dans lequel le polymère présente un taux de formation d'arborescence inférieur à 25, de préférence inférieur à 10, un facteur de puissance compris dans l'intervalle de 0,0002 a 0,0005, et une constante diélectrique comprise dans l'intervalle de 1,8 à 2,4, et comprend l'élément électriquement isolant (i) présent en au moins un exemplaire, ou bien dans lequel le polymère présente un taux de formation d'arborescence inférieur à 15, de préférence inférieur à 10, un facteur de puissance compris dans l'intervalle de 0,0002 à 0,005, et une constante diélectrique comprise dans l'intervalle de 1,8 à 2,4, et comprend l'élément semiconducteur (ii) présent en au moins un exemplaire.

11. Dispositif suivant l'une quelconque des revendications précédentes, dans lequel l'élément conducteur comprend l'aluminium, le cuivre ou l'acier ou un élément semiconducteur comprenant au moins un substrat électriquement semiconducteur, facultativement avec l'élément semiconducteur comprenant un polymère répondant à la définition suivant l'une quelconque des revendications 1 à 8 renfermant une charge conductrice, de préférence le noir de carbone.

12. Utilisation d'un élément isolant polymérique qui comprend un polymère choisi dans le groupe consistant en un polymère formé par polymérisation d'éthylène avec au moins un comonomère choisi dans le groupe consistant en alpha-oléfines en C₃ à C₂₀ et des polyènes en C₃ à C₂₀, le polymère ayant une masse volumique comprise dans l'intervalle de 0,86 g/cm³ à 0,96 g/cm³, un indice de fluidité (ASTM D-1238) compris dans l'intervalle de 0,2 dg/min à 100 dg/min, une distribution des poids moléculaires comprise dans l'intervalle de 1,5 à 30, et un indice d'étendue de distribution de composition supérieur à 45 pour cent et pouvant être obtenu au moyen d'un catalyseur à base d'un métallocène pour parvenir à un taux d'effet retardateur libre, tel qu'il est défini dans la présente invention, inférieur à 40.

13. Utilisation suivant la revendication 12, dans laquelle le polymère présente un facteur de puissance de 0,0002 à 0,0005 et une constante diélectrique de 1,8 à 2,4.

14. Utilisation suivant la revendication 12 ou 13, dans laquelle le polymère ne contient aucun inhibiteur de formation d'arborescence.
